# EUROPEAN PATENT SPECIFICATION

(11) **EP 4 390 693 B1**
(45) Date of publication and mention of the grant of the patent: **02.12.2026**
(21) Application number: 22216407.1
(22) Date of filing: 23.12.2022
(51) Int. Cl.: G06F 11/07, G06F 11/30, G06F 11/34, G06F 21/52, G06F 21/56, G06N 20/00, G06F 21/55

(54) **METHOD AND MICROARCHITECTURE FOR ANOMALY DETECTION BASED ON HARDWARE PERFORMANCE MONITORS**
VERFAHREN UND MIKROARCHITEKTUR ZUR ANOMALIEDETEKTION AUF BASIS VON HARDWARELEISTUNGSMONITOREN
PROCÉDÉ ET MICROARCHITECTURE POUR DÉTECTION D'ANOMALIES SUR LA BASE DE MONITEURS DE PERFORMANCE DE MATÉRIEL

(43) Date of publication of application: 26.06.2024
(73) Proprietor: Rockwell Collins, Inc., Cedar Rapids, IA 52498 (US)
(72) Inventor: SALINAS HERNANDDO, Gonzalo, Cork T12 X2TN (IE); GARCIA GENER, Alejandro, Cork T12 FA49 (IE); DE LA CRUZ MARTINEZ, Raul, Rochestown T12 RKH6 (IE)
(74) Representative: Dehns

(56) References cited:
- US-A1- 2019 354 680
- US-B2- 10 540 218
- SOKOLOVA KARINA ET AL: "Android application classification and anomaly detection with graph-based permission patterns", DECISION SUPPORT SYSTEMS, ELSEVIER, AMSTERDAM, NL, vol. 93, 20 September 2016 (2016-09-20), pages 62 - 76, XP029854651, ISSN: 0167-9236, DOI: 10.1016/J.DSS.2016.09.006
- JIN XIN ET AL: "Mining Anomalous Usage of Sensitive Data through Anomaly Detection", 2017 3RD INTERNATIONAL CONFERENCE ON BIG DATA COMPUTING AND COMMUNICATIONS (BIGCOM), IEEE, 10 August 2017 (2017-08-10), pages 59 - 67, XP033255094, DOI: 10.1109/BIGCOM.2017.44
- FISHER J A: "Customized instruction-sets for embedded processors", DESIGN AUTOMATION CONFERENCE, 1999. PROCEEDINGS. 36TH NEW ORLEANS, LA, USA 21-25 JUNE 1999, PISCATAWAY, NJ, USA,IEEE, US, 21 June 1999 (1999-06-21), pages 253 - 257, XP010344071, ISBN: 978-1-58113-092-8, DOI: 10.1109/DAC.1999.781321

## Description

### FIELD

This invention relates to a microarchitecture that includes an anomaly detection unit for safety and security on critical embedded systems, and a method for detecting anomalies.

### BACKGROUND

There has been a recent movement from single core processors to processors with multiple processing cores within the same processor device, which can provide a significant performance increase with a similar amount of power consumption.

As such, a wide range of multi-processor system-on-chip (MPSoC) architectures targeted for embedded applications have appeared on the market over the last years. This kind of MPSoC includes multiple processing cores, either homogeneous or heterogeneous, on the same die. Multi-core processors (MCP) with two or more processing cores overcome the frequency scaling, power consumption and heat dissipation problems associated with single core processors, all whilst the effective throughput is increased.

As such, MCPs have delivered significant performance improvements over traditional single-core processors. However, their use in safety-critical systems (such as avionics systems) poses some unique challenges that are otherwise not present in typical single-core processors, which otherwise run a single process at a time.

For efficiency, MCP designs include shared resources on the device. Processor cores in MCPs are typically tightly or loosely coupled, sharing intermediate memory systems (cache hierarchies) and interconnection buses in order to access main memory and external input/output (I/O) devices. MPSoC architectures, in order to simplify board layout design, integrate more components onto the device to reduce the physical footprint.

Depending on the hardware implementation, tasks running on different cores (i.e. different processes or threads) may share some of these resources while they are being executed. However, the simultaneous execution of tasks on a parallel computer architecture can cause contention in the form of delays accessing certain shared resources and thus interference and variability on their typical execution time. Contention can be a particularly serious issue when it comes to real-time and/or safety-critical systems.

In safety-critical applications, for example in avionics systems such as those for helicopters or other aircraft, there are specific requirements that stem from the concurrent performance of tasks in MCPs. These include application isolation and determinism. Application isolation relates to the separation of the tasks of one application from the rest of the running processes, e.g. to shield the application from exploits. Determinism is the property of, when given a particular input, always producing the same output, and always passing through the same sequence of states. Furthermore, in such situations and for certification, it is typically necessary to know the actual execution time of a given set of tasks, which cannot be known without knowing the structure of a MCP and any potential contention between the tasks.

In any von Neumann architecture, processors in MPSoCs are tightly coupled (i.e. highly dependent on one another, such that changes in one module create a ripple effect in the performance of others) or loosely coupled (i.e. weakly associated with one another, such that changes in each component have limited effect in the performance of the others). They have intermediate memory systems (cache hierarchies) and interconnection buses to access main memory and external I/O devices. Depending on the specific hardware implementation, tasks running on different cores (e.g. processes or threads) may share some of these resources while they are being executed.

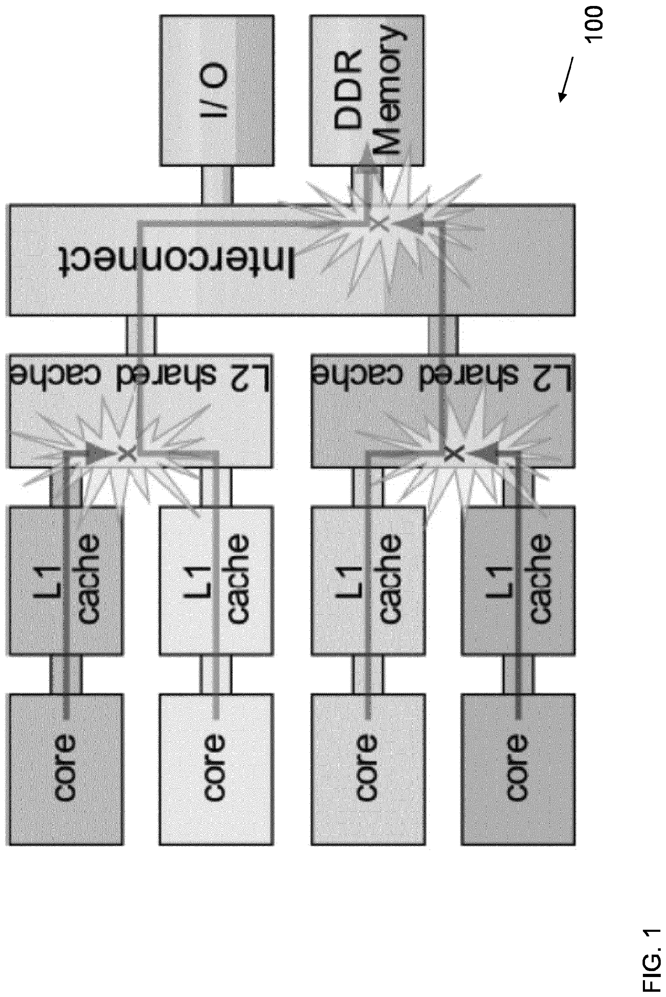

For example, Figure 1 shows an example MPSoC 100 and the resources that are shared between four separate cores, specifically the two Level 2 shared cache banks, and the common interconnect network. The simultaneous execution of tasks on different cores on a parallel computer architecture can cause contention in the form of delays accessing certain shared resources and thus interference and variability on their typical execution time.

Specifically, in the real-time embedded system realm for avionics, task interference due to the contention on shared resources poses a big challenge for determinism, and therefore, certification. The uncertainty of not knowing beforehand the actual execution time on an MCP hinders certification on the avionics scope, e.g. as detailed in the CAST-32A, MULCORS and ARINC-653 papers.

In this way, when providing an MCP for safety-critical uses, it is generally necessary to ensure that multiple applications running on a single core do not interfere with another application's performance, and additionally that each core will execute its designated tasks in the proper sequence at all times, and within an acceptable time period.

Multi-core semiconductor manufacturers designing MCPs for the commercial market tend to optimize their processors for performance, not safety and isolation, and additionally do not tend to publish details of the internal structure of their MCPs. In this way, it is difficult to predict the kinds of scheduling conflicts that might occur. This can make it challenging to design software for execution by such processors, especially in safety-critical contexts

Manufacturers of commercial off-the-shelf (COTS) systems do provide Hardware Performance Monitors (HPM) in their designs to allow some degree of visibility of specific events over the system, to support verification and runtime testing. These HPM units incorporate Performance Monitoring Counters (PMCs) that are used to build software tests by interrogating their assigned registers over time.

A representative platform of HPM capabilities is the NXP T2080 platform, which is an MCP architecture that has been broadly adopted for embedded systems to implement safety-critical applications. The NXP T2080 processor comprises 4 cores, each owning its private instruction and data L1 cache. An L2 banked cache of 2MB is shared among cores and connected to the memory controller through the CoreNet Coherence Fabric (CCF). Its HPM unit allows to monitor L2 and CCF events through a set of PMCs.

However, very often, such general-purpose architectures need to balance the number of events and registers to manage complexity and space, which limits their usefulness. In addition, software-based tests and register gathering add overhead to the already complex applications.

As a result, the design and customization of microarchitectures by Tier-1 suppliers (assemblers) is gaining traction against the use of COTS systems. This presents the ability to specially adapt the microarchitecture to the customer needs, whilst allowing for a fuller understanding of the limitations of the hardware implementation. This is usually not possible in the case of COTS-based microprocessors, where manufacturers keep their IP proprietary, and rarely reveal their HW implementations in detail to the public in the Technical Reference Manuals (TRM). The lack of this information enforces assemblers to conduct large and costly campaigns to reveal any hidden implementation to fully understand the behaviour of the System on Chip (SoC) and be able to certify the final product regarding determinism.

As a solution for designing/customising microarchitectures, fast-prototyping frameworks tailored to the design of SoC architectures, such as Chipyard, provide an way of developing custom architectures with specific requirements.

Even with such options, there still exists a need to more efficiently design, assess, validate, mitigate issues and repeat prototyping (if necessary) in order to create custom microarchitectures based on their specific requirements. In addition, there exists a need to be able to monitor the processes being executed on a processor, whether COTS or custom, in order to quickly and accurately identify anomalies in their nominal execution (i.e. if a given task does not run as it was expected to) and identify potential malware.

US 10 540 218 B2 relates to a processor system and a method for monitoring processors, in particular for critical systems. SOKOLOVA KARINA ET AL: "Android application classification and anomaly detection with graph-based permission patterns", DECISION SUPPORT SYSTEMS, ELSEVIER, AMSTERDAM, NL, VOL. 93, 20 September 2016, pages 62-76 relates to Android application classification and anomaly detection with graph-based permission patterns. JIN XIN ET AL: "Mining Anomalous Usage of Sensitive Data through Anomaly Detection", 2017 3RD INTERNATIONAL CONFERENCE ON BIG DATA COMPUTING AND COMMUNICATIONS (BIGCOM), IEEE, 10 August 2017, pages 59-67 relates to mining anomalous usage of sensitive data through anomaly detection. FISHER J A: "Customized instruction-sets for embedded processors", DESIGN AUTOMATION CONFERENCE, 1999, PROCEEDINGS, 36TH NEW ORLEANS, LA, USA 21-25 June 1999, PISCATAWAY, NJ, USA, IEEE, US, 21 June 1999, pages 253-257 relates to customized instruction-sets for embedded processors. US 2019/354680 A1 relates to identifying malicious code execution of an enclave.

### SUMMARY

According to a first aspect, there is provided a method for detecting anomalies in the nominal execution of tasks in a processor system. The method comprises executing a task on the processor system; monitoring, in real time via dedicated communication means, hardware performance monitors, HPMs, of at least one resource of the processor system resulting from the execution of the task on the processor system; classifying the task based on the monitored HPMs; comparing the classified task with an expected completion profile of the task; and if the classified task deviates from the expected completion profile, then identifying an anomaly in the nominal execution of the task. The task is classified based on their Arithmetic Intensity (AI) metric.

By providing independent monitoring and analysis that has direct and independent communication to the processor system and specifically the HPMs of the components of interest of the processor system, it is possible to provide enhanced visibility over the behaviour of the processor system. This is provided whilst maintaining a low monitoring overhead, which provides no contention or determinism risks owing to the dedicated communication between the monitoring system and the processor system, and without increasing the attack surface for classic malware methods. In addition, safety and security analysis of the processes are executed at run time, which allows for corrective measures to be taken sooner, including during operation.

As would be appreciated, the term "in real time" does not necessarily relate to a concurrent process, but merely a process with very low latency (i.e. within some cycles) enabled by the dedicated communication means which allows for commands may be submitted to the monitoring system soon after being executed in the core pipeline. This allows for any corrective actions to be taken during operation of the processor system, as opposed to a post-analysis which can only identify whether anomalies had occurred in previous operation.

Whilst it is foreseen that the method of the first aspect would find use on a processing system with any number of main cores (whether that be a single core, or multi cores), the real time monitoring of the HPMs and their performance counters such as PMCs allows for Built-In-Self-Test possibilities for timing correctness in multicore systems. As such, the processor system may comprise a multi-processor system-on-chip, MPSoC, system.

The steps of monitoring, classifying, comparing and identifying may be performed by a tightly coupled hardware accelerator, TCHA. In this way, the monitoring system may be a TCHA. A TCHA is a tightly coupled piece of computer hardware that is configured to perform a limited set of specific instructions more efficiently when compared to software (SW) running on one or more of the main core(s) of the processing system.

The processor system may be based on a customisable instruction set architecture, ISA, configured to instruct the TCHA. Such architectures allow for custom instructions that can be defined to configure, read, write and enable the status of an external device. These can be leveraged to enable the integration of a separate device, such as a TCHA. As such, by utilising an ISA architecture, such as a RISC-V architecture, the instructions may be customised so as to be made aware of and utilise the interface connecting the TCHA with the RISC-V core(s). One example of possible implementation utilise the standardized RoCC interface.

In response to identifying an anomaly in the nominal execution of the task, the method may further comprise instructing an interruption to one or more main core(s) of the processor system in order to remove the anomalous artefact. This is enabled by the real-time monitoring that is provided by the first aspect.

Additionally or alternatively, in response to identifying an anomaly in the nominal execution of the task, the one or more main core(s) of the processor system may be notified. Therefore, the identification of an anomaly may not necessary result in an interrupt. The identification may be via messages, flags, CSR (Control-Status Registers) update, etc.

The comparing of the classified task with an expected completion profile of the task and identifying anomalies may be performed by procedural coding and/or machine learning paradigms.

The method may further comprise inputting historical HPM data for the completion of the task into a machine learning model in order to determine the expected completion profile of the task. In this way, a machine learning model may be used to firstly learn how a task profile should look, and then to classify the same task in a real time operation to see if there has been anomalous execution.

In a second aspect, there is provided a system comprising a processor system and means for detecting anomalies in the nominal execution of tasks in the processor system. The means for detecting anomalies being connected to the processor system via dedicated communication means and is configured to: monitor, in real time via dedicated communication means, hardware performance monitors, HPMs, of at least one resource of the processor system resulting from the execution of a task on the processor system; classify the task based on the monitored HPMs; compare the classified task with an expected completion profile of the task; and if the classified task deviates from the expected completion profile, then identify an anomaly in the nominal execution of the task. The task is classified based on their Arithmetic Intensity (AI) metric.

The processor system may be a multi-processor system-on-chip, MPSoC, system. The processor system may be based on a customisable instruction set architecture, ISA, configured to instruct the means for detecting anomalies. The means for detecting anomalies may comprise a tightly coupled hardware accelerator, TCHA, tightly coupled to the processor system. The TCHA may comprise a machine learning model configured to classify the task.

The system and methods outlined above may find particular use in safety-critical applications, for example in avionics systems such as those for helicopters or other aircraft. Therefore, the processor system may be a processor system for use on aircraft.

### BRIEF DESCRIPTION OF THE DRAWINGS

Certain examples of the disclosure will now be described, by way of example only, with reference to the accompanying drawings, in which:
Figure 1 is a schematic diagram of an example MPSoC with multiple computational units, shared memory hierarchies and interconnection buses and possible interference channels that can create contention;
Figure 2 is a general schematic an architecture for anomaly detection;
Figure 3 is a specific schematic of an architecture for anomaly detection;
Figure 4 is an example of how tasks to be run on a MCP system may be classified.

### DETAILED DESCRIPTION

Whilst the methods and systems herein may be described with regards to a multi-core processor (MCP), it would be appreciated that the teaching herein is not limited to only a single processor with multiple cores, but also other multiple processing systems, such as a network of separate processors (i.e. multi-processor systems). In addition, the methods and systems considered herein may be applied to a single processor with a single core.

Current architectures and methods for detecting anomalous program execution processes (e.g. malware) tend to lack flexibility when selecting/detecting interesting events and HPMs, pose a possible contention and security risk when mapping the anomaly detector as a memory mapped peripheral, and/or incur substantial overhead when running the detection algorithm by means of software within the cores.

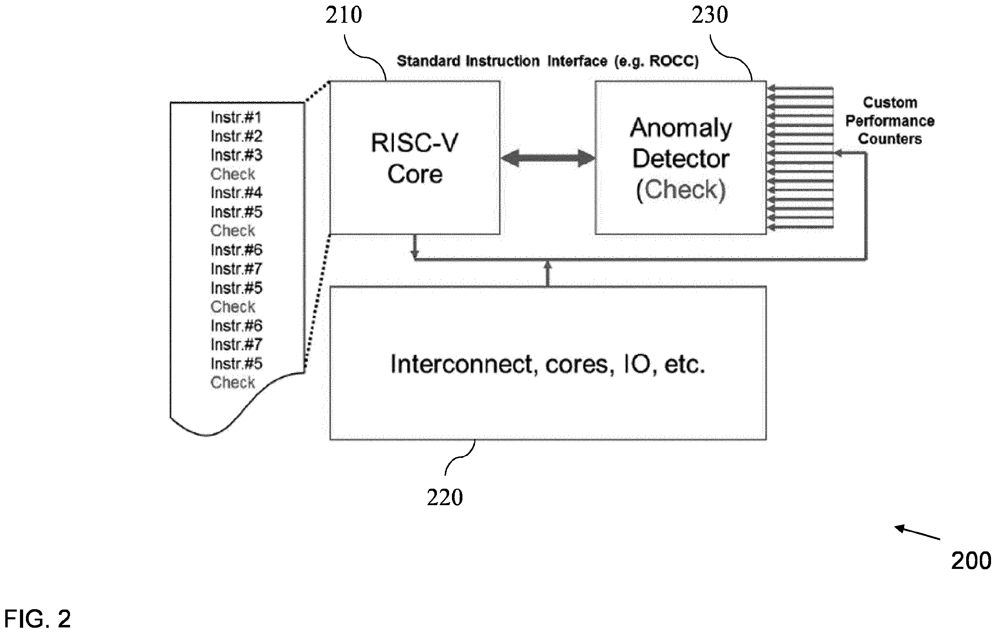

Figure 2 shows a general schematic of an architecture 200 for anomaly detection that may overcome at least some of these issues. There is provided an anomaly detector 230 tightly coupled to the main core(s) 210 and their shared resources interconnect/cores/IO etc 220. The anomaly detector 230 is configured to monitor the HPMs of the HW resources (i.e. the core(s) 210 and resources 220) in order to detect any anomalies in the processes running thereon.

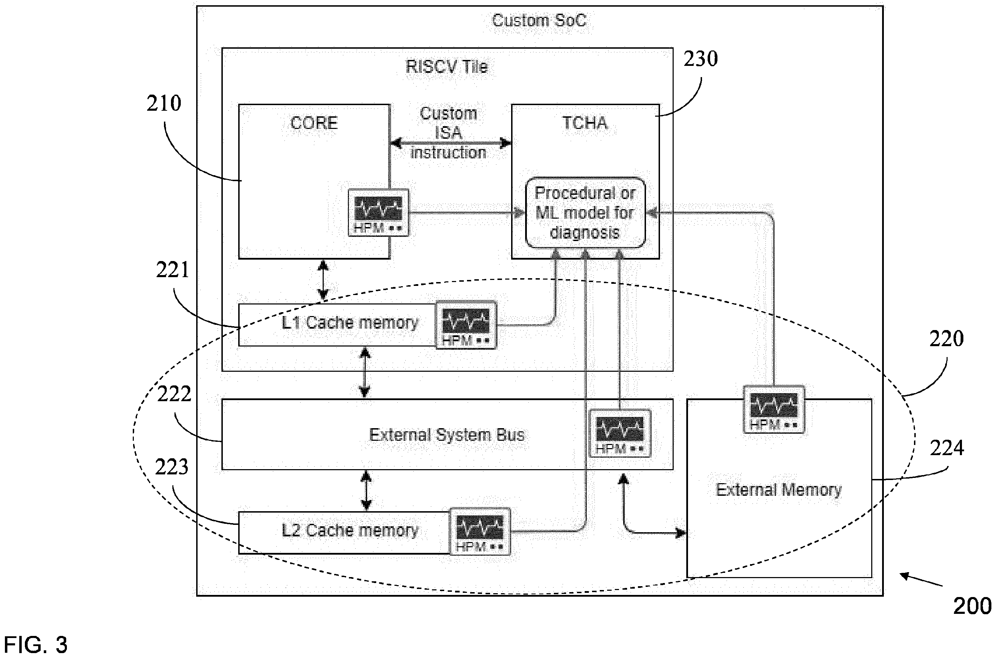

A more specific schematic of such an architecture 200 for anomaly detection may be seen in Figure 3. As can be seen, the architecture 200 (such as a custom SOC architecture) comprises one or more core(s) 210 with resources 220 (in the example of Figure 3, a L1 cache memory 221, an external system bus 22, a L2 cache memory 223, an external memory 224 one or more of which may be shared between multiple cores of the MCP system).

As can be seen in Figure 3, each of the components comprise HPMs tightly coupled to each of the critical HW resources of interest to be monitored. In Figure 3, each of the core(s) 210 and the resources 220 comprise respective HPMs, although it would be appreciated that HPMs may be present only on the critical HW resources of interest.

These HPMs allow for gathering of specific system information such as: cache hits and misses, number of instructions retired, number of clock cycles, number and types of transactions through the system bus, number of cycles the HW resource has been idle, stalled or busy, etc.

The architecture 200 further comprises an anomaly detector, which in the example of Figure 3 is a tightly coupled hardware accelerator (TCHA) 230 configured to detect anomalies. A TCHA is a tightly coupled piece of computer hardware that is configured to perform a limited set of specific instructions more efficiently when compared to software (SW) running on one or more of the main core(s) 210. As can be seen, the HPM data is directly communicated to the TCHA 230 through dedicated connections. Depending on the complexity of the events analyzed, the HPM blocks may comprise sequential state machines, instant combinational logic, and/or signals tied together and routed to the TCHA. It would be appreciated that other anomaly detectors could be utilised, that are configured to perform the function of the TCHA 230 outlined below.

As can be seen, the TCHA 230 functions in parallel to the main core(s) 210 of an MCP, with dedicated interconnections between the HPM units and the TCHA 230 so as to allow the TCHA 230 to retrieve necessary information for detecting anomalies. The TCHA comprises one or more algorithms to detect anomalies. For example, the algorithms may comprise various procedural coding and machine learning paradigms, or a combination of both.

In this way, the TCHA is configured to perform data analysis of the information gathered by the HPM units. Owing to the fact that the TCHA is a separate unit that operates in parallel to the existing HW, the TCHA may analyze the received HPM data on demand and/or continuously, without limiting the core processing power. By utilising such an approach, the core does not need to execute a specific SW task and dedicate computing resources to sample the HPMs' units, then analyze their status and take any necessary mitigation decisions. Rather, all the required steps can be effectively and continuously (if desired) performed in background by the TCHA component.

The TCHA may be configured to analyse any desired HPM data, for example by monitoring the number of cache accesses, cache misses, floating point operations, and/or total instruction count. The TCHA is configured to identify any combination or relation of events that might reveal an anomaly in the nominal execution. Such collected data from the HPMs may be used by TCHA to perform security maintenance tasks for Prognostics and Health Monitoring (PHM), such as identifying anomalies. For example, if an application performs a disproportionately high number of memory accesses, but has comparatively very few operations with that data, it may be deduced that this indicates a faulty application, and/or a malicious application that is intentionally trying to cause cache thrashing (which in turn can lead to nondeterministic behaviour, presenting issues in safety critical applications) or a row-hammer attack (which can generate bit flip corruption).

The TCHA may be incorporated into the HW implementation in any suitable way, such as a classic memory mapped peripheral (MMIO). However, the use of a RISC-V architecture (or any other customisable instruction set architecture (ISA)) allows the customization of certain instructions. These custom instructions can be defined to configure, read, write and enable the status of an external device. These can be leveraged to enable the integration of a separate TCHA 230 . As such, by utilising an RISC-V architecture, the instructions may be customised so as to be made aware of and utilise the interface connecting the TCHA with the RISC-V core(s). In addition, RISC-V architectures define some well-known PMCs, and these can be extended at will. One such example of possible implementation utilise the standardized RoCC interface, although it would be appreciated that other instructions and standard and non-standard interfaces may be utilised.

The use of such custom instructions in a RISC-V may provide several advantages over classic MMIO implementation. For example, by utilising the instructions for integration it may result in a very low latency overhead. In this way, and in the example of Figure 3, main core(s) 210 communicates directly with the THCA 230, avoiding the need to go through interconnects and buses. As such, the latency may be reduced to only a few cycles, as commands may be submitted to the dedicated TCHA bus soon after being executed in the core pipeline. In addition, this dedicated communication bus to the TCHA means that the new anomaly detector capability does not produce any possible contention at all, as the resource is not shared with other cores or IP blocks and it does not have access to shared interconnects in the chip. In addition, the tightly-coupled configuration helps to mitigate the risk of side-channel attacks, as the TCHA component cannot be accessed by external devices, and additionally the attack surface is greatly reduced as the custom instructions only perform what they are intended for.

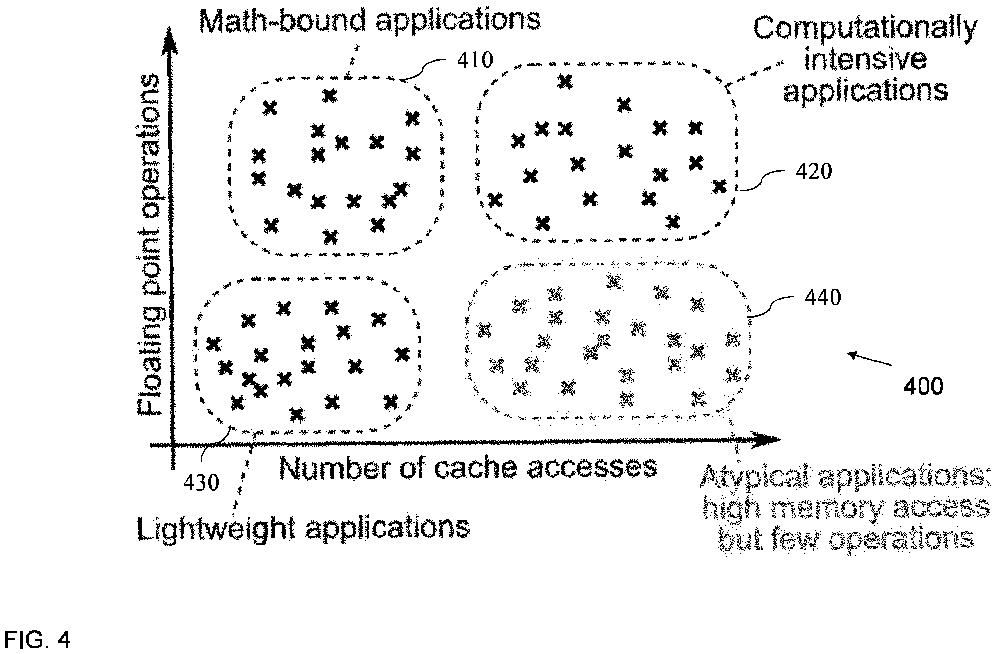

As above, the TCHA in the example of Figure 3 may analyse the received HPM data from one or more of the HW resources to identify anomalies. In order to do so, the TCHA may be configured to behaviourally classify the tasks under execution on the processor system to monitor if an anomaly arises on the system. One such classification may be seen in Figure 4, where tasks may be categorised based on their computational and memory access pattern.

Applications running on von Neumann architectures can be divided between compute, and memory bound. For a given hardware platform, the performance of the application is limited by the number of arithmetic operations that are performed and are said to be compute bound. On the other hand, on memory bound applications, the performance and throughput of the system will be limited by the number of accesses (either reading or writing) that the application performs. This memory ratio classification is expressed as Arithmetic Intensity (AI) for a code block. Tasks are classified by the TCHA based on their Al metric.

Figure 4 shows a plot 400 of floating point operations on the y-axis, and the number of cache (memory) accesses on the x-axis. Compute bound tasks are mainly dominated by arithmetic operations therefore lie higher on the y-axis of Figure 3. Memory bound tasks are mainly dominated by the task algorithm and have a higher number of cache accesses and therefore are represented towards the right-hand side of the x-axis on the graph of Figure 4.

Figure 4 shows four broad categories of tasks that may be run on the MCP system, such as one of the systems described above. The math-bound applications 410 are characterised by a high number of floating point operations, but a low number of cache accesses. The computationally intensive 420 applications have a high number of cache accesses and floating point operations. The lightweight applications 430 have a low number of floating point operations, and a low number of cache accesses. The atypical applications 440 have relatively high cache accesses, yet a low number of floating point operations. As would be appreciated, the classification of tasks in Figure 4 is a non-exhaustive list, and any number of classifications may exist, taking into account any number of HCM metrics.

By tracking various HPM metrics of completed tasks, it is therefore possible to classify each task, and then compare the tasks with an expected completion profile. One such way of classifying such tasks may be to train a machine learning model to analyze the whole available set of HPM metrics to generate a behavioural model for each task under execution, and hence classify each task under execution.

As alluded to above, various HPM metrics may be processed for the behavioural model. For example, they may include computed Al metrics as well as others which give information about latencies on interconnects, peripherals and devices (e.g. idle, busy and stall cycles). This is particularly advantageous in analysing the performance of custom microarchitectures, as the available HPM units (and resultant metrics) may be selected so as to allow for better identification of anomalous tasks.

During operation, the one or more core(s) 210 may signal the TCHA component 230 every time that a specific task is being executed, so that the TCHA is able to track which task/hardware is generating the current metrics on the overall SoC. For example, this information may be fed to a machine learning model of the TCHA. Using a historical record, the model may be able to identify when the given task changes their classification topology in real time. For example, and with reference to the classifications shown in Figure 4, a given task may historically operate as a lightweight application 430, but then in the latest execution may begin to display an unusually high number of cache accesses (shifting the task towards the atypical classification). This change on the classification pattern may indicate a potential anomaly due to safety or security reasons.

Owing to the TCHA and its dedicated communication to the SoC allowing for near-instantaneous operation with no effect on the determinism or contention, the TCHA may operate in real time. Therefore, when a potential anomaly is identified, the TCHA may send an interrupt to the one or more main core(s) in order to take correction measures such as mitigations to get rid of the anomalous artefact. Additionally or alternatively, the anomaly detector may notify the system, via messages, flags, CSR (Control-Status Registers) update, etc. This may occur without interrupting the main core(s).

By providing an independent anomaly detector that has direct and independent communication to the SoC and specifically the HPMs of the components of interest of the SoC, it is possible to provide enhanced visibility over the behaviour of the SoC architecture. This is provided whilst maintaining a low monitoring overhead, which provides no contention or determinism risks owing to the dedicated communication between the anomaly detector and the SoC, and without increasing the attack surface for classic malware acceleration methods. In addition, safety and security analysis of the processes are executed at run time, which allows for corrective measures to be taken sooner, and otherwise during operation. In addition, the real time monitoring of the HPMs and their performance counters such as PMCs allows for Built-In-Self-Test possibilities for timing correctness in multicore systems.

It will be appreciated by those skilled in the art that the disclosure has been illustrated by describing one or more specific examples, but is not limited to these examples; many variations and modifications are possible within the scope of the accompanying claims.

## Claims

1. A method for detecting anomalies in the nominal execution of tasks in a processor system, the method comprising:
executing a task on the processor system,
monitoring, in real time via dedicated communication means, hardware performance monitors, HPMs, of at least one resource of the processor system resulting from the execution of the task on the processor system;
classifying the task based on the monitored HPMs;
comparing the classified task with an expected completion profile of the task; and
if the classified task deviates from the expected completion profile, then identifying an anomaly in the nominal execution of the task;
wherein the task is classified based on their Arithmetic Intensity, Al, metric.

2. The method of claim 1, where the processor system comprises either a single core or multi-core system-on-chip, SoC, system.

3. The method of claim 1 or 2, wherein the steps of monitoring, classifying, comparing and identifying are performed by a tightly coupled hardware accelerator, TCHA.

4. The method of claim 3, wherein the processor system is based on a customisable instruction set architecture, ISA, configured to instruct the TCHA.

5. The method of any preceding claim, further comprising, in response to identifying an anomaly in the nominal execution of the task, instructing an interruption to one or more main core(s) of the processor system in order to remove the anomalous artefact.

6. The method of any preceding claim, further comprising, in response to identifying an anomaly in the nominal execution of the task, notifying one or more main core(s) of the processor system.

7. The method of any preceding claim, wherein the comparing the classified task with an expected completion profile of the task and identifying anomalies is performed by procedural coding and/or machine learning paradigms.

8. The method of any preceding claim, further comprising inputting historical HPM data for the completion of the task into a machine learning model in order to determine the expected completion profile of the task.

9. A system comprising,
a processor system (200);
means (230) for detecting anomalies in the nominal execution of tasks in the processor system, the means for detecting anomalies being connected to the processor system via dedicated communication means and being configured to:
monitor, in real time via dedicated communication means, hardware performance monitors, HPMs, of at least one resource of the processor system resulting from the execution of a task on the processor system;
classify the task based on the monitored HPMs;
compare the classified task with an expected completion profile of the task; and
if the classified task deviates from the expected completion profile, then identify an anomaly in the nominal execution of the task
wherein the task is classified based on their Arithmetic Intensity, Al, metric.

10. The system of claim 9, wherein the processor system is a single core or multi-core system-on-chip, SoC, system.

11. The system of claim 9 or 10, wherein the processor system is based on a customisable instruction set architecture, ISA, configured to instruct the means for detecting anomalies.

12. The system of any of claims 9 to 11, wherein the means for detecting anomalies comprises a tightly coupled hardware accelerator, TCHA, tightly coupled to the processor system, optionally wherein the TCHA comprises a machine learning model configured to classify the task.

13. The system of any of claims 9 to 12, further comprising means for interrupting and/or notifying one or more main core(s) of the processor system when an anomaly is detected.

14. The system of any of claims 9 to 13, wherein the processor system is a processor system for use on aircraft.

## Patentansprüche

1. Verfahren zum Erkennen von Anomalien bei der nominalen Ausführung von Aufgaben in einem Prozessorsystem, wobei das Verfahren umfasst:
Ausführen einer Aufgabe auf dem Prozessorsystem,
Überwachen, in Echtzeit über dedizierte Kommunikationsmittel, von Hardware-Leistungsüberwachern, HPMs, mindestens einer Ressource des
Prozessorsystems, die aus der Ausführung der Aufgabe auf dem Prozessorsystem resultieren;
Klassifizieren der Aufgabe auf Grundlage der überwachten HPMs;
Vergleichen der klassifizierten Aufgabe mit einem erwarteten Abschlussprofil der Aufgabe;
und
falls die klassifizierte Aufgabe von dem erwarteten Abschlussprofil abweicht, dann
Erkennen einer Anomalie bei der nominalen Ausführung der Aufgabe;
wobei die Aufgabe auf Grundlage ihrer Arithmetischen Intensität, AI, Metrik klassifiziert wird.

2. Verfahren nach Anspruch 1, wobei das Prozessorsystem entweder ein Einzelkern- oder ein Mehrkern-System-on-Chip-System, SoC, umfasst.

3. Verfahren nach Anspruch 1 oder 2, wobei die Schritte des Überwachens, Klassifizierens, Vergleichens
und Erkennens von einem eng gekoppelten Hardwarebeschleuniger, TCHA, durchgeführt werden.

4. Verfahren nach Anspruch 3, wobei das Prozessorsystem auf einer anpassbaren
Befehlssatzarchitektur, ISA, basiert, die dazu konfiguriert ist, den TCHA anzuweisen.

5. Verfahren nach einem der vorstehenden Ansprüche, ferner umfassend, als Reaktion auf das Erkennen
einer Anomalie bei der nominalen Ausführung der Aufgabe, das Anweisen einer Unterbrechung
an einen oder mehrere Hauptkern(e) des Prozessorsystems, um das anomale Artefakt zu entfernen.

6. Verfahren nach einem der vorstehenden Ansprüche, ferner umfassend, als Reaktion auf das Erkennen
einer Anomalie bei der nominalen Ausführung der Aufgabe, das Benachrichtigen eines oder
mehrerer Hauptkern(e) des Prozessorsystems.

7. Verfahren nach einem der vorstehenden Ansprüche, wobei das Vergleichen der klassifizierten Aufgabe mit
einem erwarteten Abschlussprofil der Aufgabe und das Erkennen von Anomalien
durch prozedurale Codierung und/oder Paradigmen des maschinellen Lernens durchgeführt wird.

8. Verfahren nach einem der vorstehenden Ansprüche, ferner umfassend das Eingeben historischer HPM-
Daten für den Abschluss der Aufgabe in ein Modell des maschinellen Lernens, um
das erwartete Abschlussprofil der Aufgabe zu bestimmen.

9. System, umfassend
ein Prozessorsystem (200);
Mittel (230) zum Erkennen von Anomalien bei der nominalen Ausführung von Aufgaben in dem
Prozessorsystem, wobei die Mittel zum Erkennen von Anomalien mit dem Prozessorsystem über dedizierte Kommunikationsmittel verbunden sind und dazu
konfiguriert sind:
in Echtzeit über dedizierte Kommunikationsmittel Hardware-Leistungsüberwacher, HPMs, mindestens einer Ressource des Prozessorsystems zu überwachen, die aus der Ausführung einer Aufgabe auf dem Prozessorsystem resultieren;
die Aufgabe auf Grundlage der überwachten HPMs zu klassifizieren;
die klassifizierte Aufgabe mit einem erwarteten Abschlussprofil der Aufgabe zu vergleichen; und
falls die klassifizierte Aufgabe von dem erwarteten Abschlussprofil abweicht, eine Anomalie bei der nominalen Ausführung der Aufgabe zu erkennen,
wobei die Aufgabe auf Grundlage ihrer Arithmetischen Intensität, AI, Metrik klassifiziert wird.

10. System nach Anspruch 9, wobei das Prozessorsystem ein Einzelkern- oder Mehrkern-System-on-Chip-System, SoC, ist.

11. System nach Anspruch 9 oder 10, wobei das Prozessorsystem auf einer anpassbaren Befehlssatzarchitektur, ISA, basiert, die dazu konfiguriert ist, die Mittel zum Erkennen von Anomalien anzuweisen.

12. System nach einem der Ansprüche 9 bis 11, wobei die Mittel zum Erkennen von Anomalien
einen eng gekoppelten Hardwarebeschleuniger, TCHA, umfassen, der eng an das Prozessorsystem gekoppelt ist, wobei der TCHA optional ein Modell des maschinellen Lernens umfasst, das dazu konfiguriert ist, die Aufgabe zu klassifizieren.

13. System nach einem der Ansprüche 9 bis 12, ferner umfassend Mittel zum Unterbrechen
und/oder Benachrichtigen eines oder mehrerer Hauptkern(e) des Prozessorsystems, wenn eine Anomalie erkannt wird.

14. System nach einem der Ansprüche 9 bis 13, wobei das Prozessorsystem ein Prozessorsystem
zur Verwendung in Luftfahrzeugen ist.

## Revendications

1. Procédé de détection d'anomalies dans l'exécution nominale de tâches dans un système
de processeur, le procédé comprenant :
l'exécution d'une tâche sur le système de processeur,
la surveillance, en temps réel via des moyens de communication dédiés, des moniteurs
de performance matériels, HPM, d'au moins une ressource du système de processeur résultant de l'exécution de la tâche sur le système de processeur ;
la classification de la tâche sur la base des HPM surveillés ;
la comparaison de la tâche classifiée avec un profil d'exécution attendu de la tâche ;
et
si la tâche classifiée s'écarte du profil d'exécution attendu, alors l'identification d'une anomalie dans l'exécution nominale de la tâche ;
dans lequel la tâche est classifiée sur la base de leur métrique d'Intensité Arithmétique, IA.

2. Le procédé de la revendication 1, où le système de processeur comprend soit un système sur puce, SoC, à cœur unique soit à plusieurs cœurs.

3. Le procédé de la revendication 1 ou 2, dans lequel les étapes de surveillance, de classification, de comparaison et d'identification sont réalisées par un accélérateur matériel étroitement couplé, TCHA.

4. Le procédé de la revendication 3, dans lequel le système de processeur est basé sur une architecture de jeu d'instructions, ISA, personnalisable configurée pour instruire le TCHA.

5. Le procédé de l'une quelconque des revendications précédentes, comprenant en outre, en réponse à l'identification d'une anomalie dans l'exécution nominale de la tâche, l'instruction d'une interruption vers un ou plusieurs cœur(s) principal/principaux du système de processeur afin de supprimer l'artefact anormal.

6. Le procédé de l'une quelconque des revendications précédentes, comprenant en outre, en réponse à l'identification d'une anomalie dans l'exécution nominale de la tâche, la notification à un ou plusieurs cœur(s) principal/principaux du système de processeur.

7. Le procédé de l'une quelconque des revendications précédentes, dans lequel la comparaison de la tâche classifiée avec un profil d'exécution attendu de la tâche et l'identification des anomalies est réalisée par un codage procédural et/ou des paradigmes d'apprentissage automatique.

8. Le procédé de l'une quelconque des revendications précédentes, comprenant en outre l'entrée de données HPM historiques relatives à l'exécution de la tâche dans un modèle d'apprentissage automatique afin de déterminer le profil d'exécution attendu de la tâche.

9. Un système comprenant,
un système de processeur (200) ;
des moyens (230) pour détecter des anomalies dans l'exécution nominale de tâches
dans le système de processeur, les moyens de détection d'anomalies étant connectés au système de processeur via des moyens de communication dédiés et étant
configurés pour :
surveiller, en temps réel via des moyens de communication dédiés,
des moniteurs de performance matériels, HPM, d'au moins une ressource
du système de processeur résultant de l'exécution d'une tâche sur le système de processeur ;
classifier la tâche sur la base des HPM surveillés ;
comparer la tâche classifiée avec un profil d'exécution attendu de la tâche ; et
si la tâche classifiée s'écarte du profil d'exécution
attendu, alors identifier une anomalie dans l'exécution nominale de la tâche
dans lequel la tâche est classifiée sur la base de leur métrique d'Intensité Arithmétique, IA.

10. Le système de la revendication 9, dans lequel le système de processeur est un système sur puce, SoC, à cœur unique ou à plusieurs cœurs.

11. Le système de la revendication 9 ou 10, dans lequel le système de processeur est basé sur une architecture de jeu d'instructions, ISA, personnalisable configurée pour instruire les moyens de détection d'anomalies.

12. Le système de l'une quelconque des revendications 9 à 11, dans lequel les moyens de détection d'anomalies comprennent un accélérateur matériel étroitement couplé, TCHA, étroitement couplé au système de processeur, optionnellement dans lequel le TCHA comprend un modèle d'apprentissage automatique configuré pour classifier la tâche.

13. Le système de l'une quelconque des revendications 9 à 12, comprenant en outre des moyens pour interrompre et/ou notifier un ou plusieurs cœur(s) principal/principaux du système de processeur lorsqu'une anomalie est détectée.

14. Le système de l'une quelconque des revendications 9 à 13, dans lequel le système de processeur est un système de processeur destiné à être utilisé sur un aéronef.
